# FASCICULE DE BREVET EUROPEEN

(11) **EP 1 213 866 B1**
(45) Date de publication et mention de la délivrance du brevet: **18.03.2015**
(21) Numéro de dépôt: 01402693.4
(22) Date de dépôt: 18.10.2001
(51) Int. Cl.: H04J 14/02, G02B 6/293

(54) **Système de démultiplexage/multiplexage en bandes entrelacées**
Verschachtelte Banden Demultiplex-Multiplex-System
Interleaved bands demultiplexing/multiplexing system

(30) Priorité: 07.12.2000 FR 0015887
(43) Date de publication de la demande: 12.06.2002
(73) Titulaire: ALCATEL LUCENT, 92100 Boulogne-Billancourt (FR)
(72) Inventeur: Noirie, Ludovic, 91620 Nozay (FR); Faure, Jean-Paul, 75014 Paris (FR)
(74) Mandataire: Sciaux, Edmond

(56) Documents cités:
- EP-A- 0 849 968
- EP-A- 1 043 859
- US-A- 5 748 350
- US-A- 5 852 505
- HARADA K ET AL: "Hierarchical optical path cross-connect systems for large scale WDM networks" OFC/IOOC'99. OPTICAL FIBER COMMUNICATION CONFERENCE AND THE INTERNATIONAL CONFERENCE ON INTEGRATED OPTICS AND OPTICAL FIBER COMMUNICATIONS (CAT. NO.99CH36322), OFC/IOOC'99. OPTICAL FIBER COMMUNICATION CONFERENCE AND THE INTERNATIONAL CONFERENCE ON IN, pages 356-358 vol.2, XP002173286 1999, Piscataway, NJ, USA, IEEE, USA

## Description

L'invention concerne les systèmes de transmission à fibre optique à multiplexage en longueur d'onde, et plus précisément le brassage ou la commutation de longueurs d'onde dans ces systèmes de transmission.

La présente invention se situe dans le contexte des commutateurs optiques, ou brasseurs, présentant une architecture à multi-granularité. La granularité est une notion qui traduit la capacité de transmission des données sur le réseau optique. Ce type d'architecture prend donc en compte différents niveaux de capacité de transmission des données pour commuter le trafic total au niveau d'un commutateur. Par exemple, une partie du trafic total peut être commutée au niveau fibre, qui correspond à un niveau de granularité élevé, une autre partie peut être commutée au niveau bande de longueurs d'onde, qui correspond à un niveau de granularité intermédiaire, et une dernière partie peut être commutée au niveau longueur d'onde, qui correspond à un niveau de granularité faible. Des niveaux supplémentaires de granularité peuvent encore être pris en compte.

En effet, la capacité de transmission dans les systèmes à fibre optique augmente avec le temps. Cette augmentation résulte d'une augmentation du nombre de canaux transmis en multiplexage de longueur d'onde dans chaque fibre, et d'une augmentation du nombre de fibres par câble. Cette augmentation pose le problème du routage et du brassage des canaux dans les dispositifs de commutation et, plus précisément, pose le problème de la complexité des dispositifs de commutation susceptibles de router un nombre croissant de canaux.

K. Harada et al., « hierarchical optical path cross-connect systems for large scale WDM networks », propose une architecture de brasseur optique correspondant à une structure de chemin optique hiérarchisé à deux couches. Il est proposé dans cet article de grouper des longueurs d'onde adjacentes pour former des bandes, et de commuter ainsi des bandes. Cette solution permet de limiter le nombre de convertisseurs de longueur d'onde utilisés dans chaque brasseur optique.

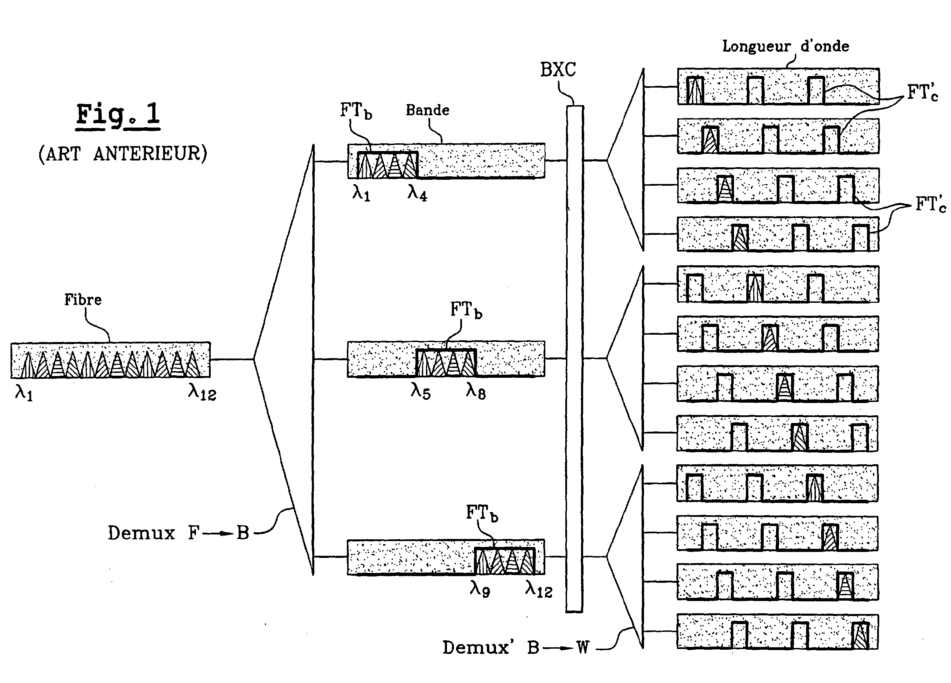

La figure 1 illustre justement le principe du démultiplexage de bandes adjacentes.

Dans l'exemple de la figure 1, la fibre est constituée de douze canaux ou longueurs d'onde λ1 à λ12. Chaque bande est constituée de quatre canaux adjacents. La fibre est donc démultiplexée en trois bandes de quatre canaux adjacents chacune par l'intermédiaire d'un démultiplexeur de fibre à bandes Demux F→B. Chaque bande est ensuite démultiplexée en longueurs d'onde par l'intermédiaire d'un démultiplexeur de bande à longueurs d'onde Demux' B→W. Un commutateur de bandes BXC est disposé entre l'étage bande et l'étage longueur d'onde, immédiatement devant les démultiplexeurs de bande à longueurs d'onde Demux' B→W.

Selon l'exemple de la figure 1, le signal de la fibre est donc filtré pour séparer les bandes adjacentes.

Ainsi, pour le démultiplexage de fibre à bandes, le démultiplexeur Demux F→B qui est utilisé est un démultiplexeur de bandes adjacentes. Un tel démultiplexeur met en oeuvre un filtrage à large bande passante dont la fonction de transfert FTb est représentée schématiquement à la figure 1. Le filtrage mis en oeuvre par le démultiplexeur de bandes adjacentes Demux F→B permet d'isoler l'ensemble des canaux d'une même bande. Une première bande est donc constituée des quatre longueurs d'onde adjacentes λ 1 à λ4, une deuxième bande est constituée des longueurs d'onde adjacentes λ5 à λ8 et une troisième bande est constitué des longueurs d'onde adjacentes λ9 à λ12.

Pour le démultiplexage de bande à longueurs d'onde, chaque bande, après routage dans le commutateur de bande BXC, est démultiplexée en quatre canaux par l'intermédiaire du démultiplexeur de bande à longueurs d'onde Demux' B→W. Chaque démultiplexeur Demux' B→W qui est utilisé est un démultiplexeur désentrelaceur 1 vers 4. Un tel démultiplexeur désentrelaceur met en oeuvre un filtrage périodique, dont la fonction de transfert FTc' est représentée schématiquement à la figure 1, basé sur des filtres de type Mach-Zehnder ou sur des réseaux de guides de type AWG, acronyme pour l'expression anglo-saxonne « Array Waveguide Grating ». Le filtrage de canal mis en oeuvre par le démultiplexeur désentrelaceur Demux' B→W est donc un filtrage périodique qui permet d'isoler un canal dans la bande.

Ainsi, pour obtenir les longueurs d'onde, il est nécessaire de mettre en oeuvre des démultiplexeurs désentrelaceurs, c'est-à-dire des démultiplexeurs où le filtrage est effectué par des filtres périodiques du type de ceux exposés ci-dessus.

En effet, dans le contexte des architectures des brasseurs optiques à multi-granularité, du fait de la présence d'étages de commutation comme le commutateur de bandes BXC, on ne peut pas connaître a priori la bande adjacente qui sera démultiplexée à l'entrée de chaque démultiplexeur de bande à longueurs d'onde. Un démultiplexeur désentrelaceur, où le filtrage est périodique permet alors de prendre en compte toutes les bandes adjacentes. Un tel démultiplexeur ne dépend pas de la bande qui est à l'entrée. Toutes les longueurs d'onde peuvent donc être démultiplexées.

Une autre manière de brasser des longueurs d'onde dans des systèmes de transmission à fibres optiques à multiplexage en longueur d'onde consiste à définir des bandes entrelacées et non pas des bandes adjacentes. Le document de brevet français intitulé « BRASSEUR OPTIQUE A BANDES ENTRELACEES » propose ainsi, pour le brassage des canaux de transmission optique, de regrouper les différents canaux ou les différentes longueurs d'onde en bandes entrelacées. Dans ce cas, les bandes sont formées de longueurs d'onde ou de canaux qui ne sont pas voisins.

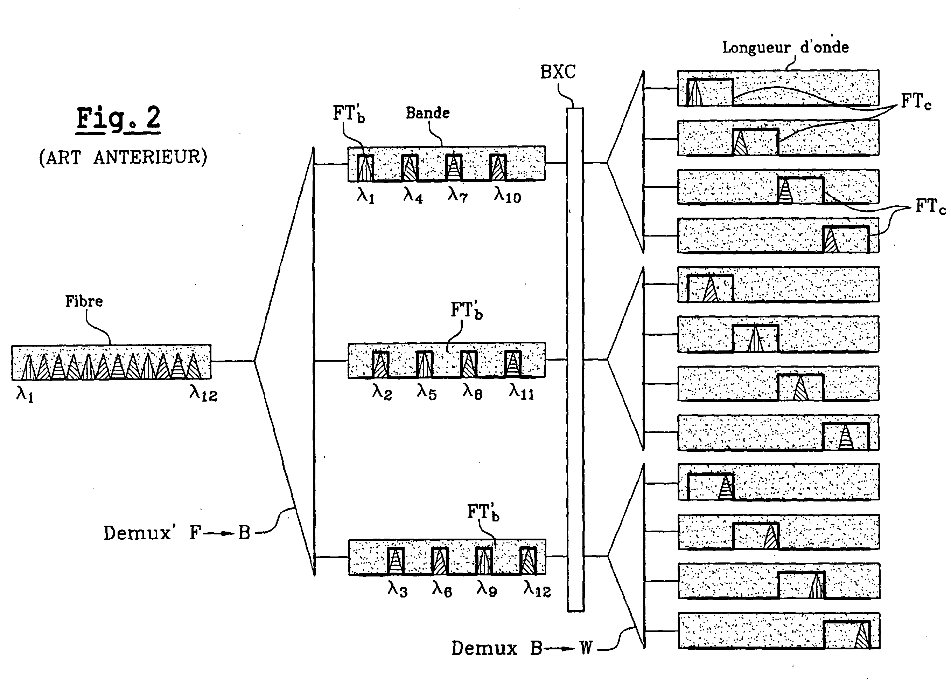

La figure 2 illustre le principe du démultiplexage lorsque des bandes entrelacées sont mises en oeuvre. La fibre est constituée de 12 longueurs d'onde λ1 à λ12. Trois bandes de quatre canaux chacune sont obtenues par l'intermédiaire d'un démultiplexeur de fibre à bandes Demux' F→B.

La fibre est donc démultiplexée en trois bandes. Ces bandes sont entrelacées, c'est-à-dire qu'un canal d'une bande est adjacent à des canaux d'autres bandes. Ainsi, une première bande est constituée des longueurs d'onde λ1, λ4, λ7 et λ10, une deuxième bande est constituée des longueurs d'onde λ2, λ5, λ8 et λ11, enfin une troisième bande est constituée des longueurs d'onde λ3, λ6, λ9 et λ12. Les canaux d'une même bande sont séparés par un intervalle spectral constant.

Chaque bande est ensuite démultiplexée en longueurs d'onde par l'intermédiaire d'un démultiplexeur de bande à longueurs d'onde Demux B→W. Avant d'être démultiplexées, les bandes sont commutées dans un commutateur de bandes BXC.

Pour le démultiplexage de fibre à bandes, la fibre est démultiplexée en trois bandes entrelacées par l'intermédiaire du démultiplexeur de fibre à bandes Demux' F→B. Le démultiplexeur Demux' F→B qui est utilisé est un démultiplexeur désentrelaceur 1 vers 3. Un tel démultiplexeur met en oeuvre un filtrage périodique, dont la fonction de transfert FTb' est représentée schématiquement à la figure 2, basé sur des filtres de type Mach-Zehnder, ou sur des réseaux de guides de type AWG, lequel filtrage permet d'isoler l'ensemble des canaux d'une même bande.

Pour le démultiplexage de bande à longueurs d'onde, chaque bande de longueurs d'onde est démultiplexée en quatre canaux par l'intermédiaire du démultiplexeur de bande à longueurs d'onde Demux B→W. Chaque démultiplexeur Demux B→W qui est utilisé est un démultiplexeur de bandes adjacentes, c'est-à-dire un démultiplexeur qui met en oeuvre un filtre à large bande passante. La fonction de transfert FTc d'un tel filtre de canal est représentée schématiquement à la figure 2.

Pour obtenir les longueurs d'onde, il est nécessaire de mettre en oeuvre des démultiplexeurs de bandes adjacentes Demux B→W car, comme expliqué plus haut, du fait de la présence de l'étage de commutation de bandes BXC, on ne connaît pas a priori la bande entrelacée qui sera démultiplexée. C'est pourquoi, en mettant en oeuvre des démultiplexeurs de bandes adjacentes à large bande passante, quelle que soit la bande entrelacée qui est à l'entrée, toutes les longueurs d'onde sont démultiplexées.

Cependant, aucun de ces deux enseignements de l'état de la technique présentés ci-dessus n'est satisfaisant. En effet, les deux systèmes de l'art antérieur, l'un avec bandes adjacentes et l'autre avec bandes entrelacées, requièrent en fait les même dispositifs de démultiplexage.

EP 1043859 A2 divulgue un noeud multiplexeur à insertion/extraction qui comporte un démultiplexeur périodique de type AWG pour séparer des groupes de longueurs d'ondes entrelacées, suivi de seconds démultiplexeurs optiques pour séparer les longueurs d'ondes.

Notamment, en ce qui concerne le système avec bandes adjacentes, pour passer des fibres aux longueurs d'onde, il faut d'abord utiliser un démultiplexeur de bandes adjacentes Demux F→B pour obtenir les bandes adjacentes, puis des démultiplexeurs désentrelaceurs Demux' B→W pour obtenir les longueurs d'onde. En ce qui concerne le système avec bandes entrelacées, pour passer des fibres aux longueurs d'onde, il faut d'abord utiliser un démultiplexeur désentrelaceur Demux' F→B pour obtenir les bandes entrelacées, puis un démultiplexeur de bandes adjacentes Demux B→W pour obtenir les longueurs d'onde.

Or, la mise en oeuvre d'un démultiplexeur de bandes adjacentes où le filtrage est effectué par un filtre à large bande passante entraîne des problèmes important en terme de qualité de filtrage. Notamment, il est difficile d'obtenir un tel filtre qui ne perde pas de longueurs d'onde entre deux bandes successives.

En effet, le problème à gérer est celui du rapport entre la bande passante et la bande de réjection du filtre. La bande passante correspond à l'ensemble du spectre qui passe sans être atténué de plus d'un certain nombre de décibels (dB) définis préalablement, 0,5 dB ou 3dB par exemple. Quant à la bande de réjection, elle correspond à un intervalle spectral en dehors duquel le signal est atténué d'au moins un certain nombre de décibels (dB) définis préalablement, typiquement 20 ou 25 dB. Les longueurs d'ondes qui se situent entre la bande passante et la bande de réjection sont inutilisables car trop atténuée pour être utilisée sur la voie considérée du démultiplexeur de bande et pas assez atténuée pour être utilisée sur d'autres voies du démultiplexeur de bande. Ce sont donc des longueurs d'ondes « perdues ».

Le but est d'obtenir un rapport proche de un pour perdre le moins de longueurs d'onde. Or pour obtenir un rapport bande passante sur bande de réjection proche de un, les fronts du filtre doivent être raides, c'est-à-dire que la forme du filtre doit être parfaitement rectangulaire. Une telle forme de filtre est technologiquement très difficile à obtenir.

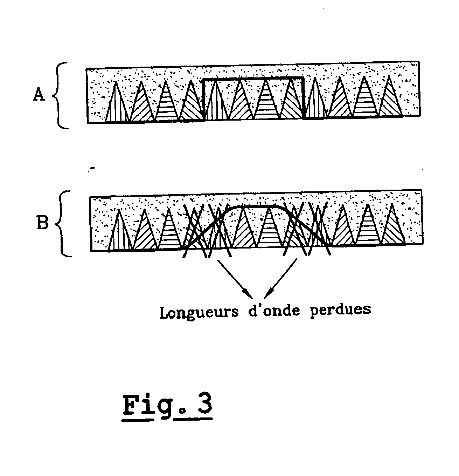

La figure 3 illustre ce problème relatif à la mise en oeuvre de démultiplexeurs de bandes adjacentes en montrant le démultiplexage de fibre en bandes adjacentes. Un démultiplexeur de bandes adjacentes est donc mis en oeuvre, avec un filtre à large bande passante.

La partie supérieur A montre un filtre idéal avec une forme parfaitement rectangulaire. La partie B de la figure 3 montre la forme du filtre telle qu'elle est réellement. La forme de filtrage rectangulaire est très imparfaite. En conséquence, les longueurs d'onde sur les bords de la bande, normalement prises en compte dans le cadre d'un filtrage idéal, sont perdues et ne peuvent pas être utilisées. Ces longueurs d'onde perdues sont barrées d'une croix sur la figure 3.

La mise en oeuvre d'un filtrage à large bande passante entraîne donc la perte de longueurs d'onde.

Aussi, le problème que se propose de résoudre l'invention est de démultiplexer n granularités optiques différentes, avec n au moins égal à trois, d'une façon efficace, en s'affranchissant des inconvénients de l'art antérieur expliqués ci-dessus, soit sans perdre de longueurs d'onde.

A cet effet, l'invention se propose d'utiliser des bandes entrelacées et de n'utiliser que des démultiplexeurs désentrelaceurs, c'est-à-dire des démultiplexeurs où le filtrage est périodique. Selon l'invention, ces démultiplexeurs sont utilisés à la fois pour le démultiplexage de fibre en bandes et pour le démultiplexage de bande en longueurs d'onde.

Le système selon l'invention est également prévu pour s'appliquer au multiplexage de longueurs d'onde en bande et de bandes en fibre. Pour cela, des multiplexeurs entrelaceurs sont mis en oeuvre dans le système.

L'invention concerne donc un système de démultiplexage optique pour démultiplexer un multiplex constitué d'au moins trois niveaux de granularités, ledit multiplex comprenant m bandes de longueurs d'onde, chaque bande de longueurs d'onde comprenant p longueurs d'onde, les bandes étant entrelacées, caractérisé en ce que ledit système comprend :
- un démultiplexeur désentrelaceur 1 vers m pour démultiplexer ledit multiplex en m bandes,
- m démultiplexeurs désentrelaceurs 1 vers p pour démultiplexer chaque bande de longueurs d'onde en p longueurs d'onde,
   et en ce que les nombres m et p sont des nombres premiers entre eux.

L'invention concerne également un système de multiplexage optique pour obtenir un multiplex constitué d'au moins trois niveaux de granularité, ledit multiplex comprenant m bandes de longueurs d'onde, chaque bande de longueurs d'onde comprenant p longueurs d'onde, les bandes étant entrelacées, caractérisé en ce que ledit système comprend :
- un multiplexeur entrelaceur p vers 1 pour multiplexer p longueurs d'onde en une bandes de longueurs d'onde,
- un multiplexeur entrelaceur m vers 1 pour multiplexer les m bandes de longueurs d'onde en une fibre,
   et en ce que les nombres m et p sont premiers entre eux.

D'autres caractéristiques et avantages de l'invention apparaîtront plus clairement à la lecture de la description suivante d'un exemple particulier de réalisation en référence aux figures dans lesquelles :
- la figure 1 est un schéma illustrant le démultiplexage de fibres en bandes et de bandes en longueurs d'onde, avec des bandes adjacentes, selon l'art antérieur, tel que décrit dans le préambule ci-dessus;
- la figure 2 est un schéma illustrant le démultiplexage de fibres en bandes et de bandes en longueurs d'onde, avec des bandes entrelacées, selon l'art antérieur, tel que décrit dans le préambule ci-dessus;
- la figure 3 est un schéma illustrant les problèmes dus à la mise en oeuvre d'un démultiplexeur de bandes adjacentes, tel que décrit dans le préambule ci-dessus;
- la figure 4 est un schéma illustrant le système de démultiplexage selon la présente invention lorsqu'il est lu de gauche à droite, et le système de multiplexage selon la présente invention lorsqu'il est lu de droite à gauche.

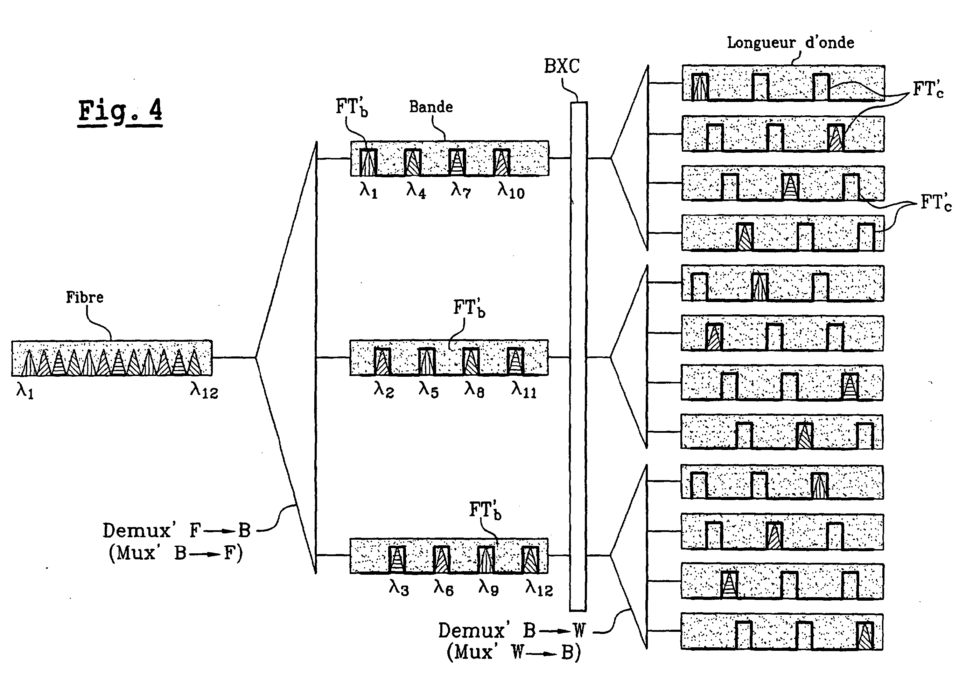

La figure 4 montre donc un exemple de fonctionnement du système selon l'invention. La fibre contient 12 longueurs d'onde λ1 à λ12. L'étage fibre est suivi par un étage composé de trois bandes, lequel étage est séparé du précédent par un démultiplexeur de fibre à bandes Demux' F→B. La fibre est donc démultiplexée en trois bandes. Ces bandes sont entrelacées, c'est-à-dire qu'un canal d'une bande est adjacent à des canaux d'autres bandes.

L'étage bande est suivi par un étage longueur d'onde. Entre ces deux étages, se trouve disposé un étage de commutation de bandes BXC. Chaque bande est démultiplexée en longueurs d'onde par l'intermédiaire d'un démultiplexeur de bande à longueurs d'onde Demux' B→W.

Pour démultiplexer la fibre en trois bandes entrelacées, le démultiplexeur utilisé est un démultiplexeur désentrelaceur 1 vers 3 Demux' F→B. Le démultiplexeur désentrelaceur Demux' F→B met en oeuvre un filtrage de bande basé sur des filtres de type Mach-Zehnder, ou sur des réseaux de guides de type AWG, dont la fonction de transfert FTb' représentée schématiquement est périodique. A chaque période du filtre, une longueur d'onde est sélectionnée pour constituer la bande.

La fibre est donc démultiplexée en trois bandes de quatre canaux chacune et un canal d'une bande est adjacent à des canaux d'autres bandes. Ainsi, une première bande est constituée des longueurs d'onde λ1, λ4, λ 7 et λ10, une deuxième bande est constituée des longueurs d'onde λ2, λ 5, λ8 et λ11, enfin une troisième bande est constituée des longueurs d'onde λ3, λ6, λ9 et λ12. Les canaux d'une même bande sont séparés par un intervalle spectral constant, correspondant à la période du filtre mis en oeuvre par le démultiplexeur désentrelaceur Demux' F→B.

Pour obtenir les longueurs d'onde, les bandes sont ensuite chacune démultiplexées en quatre canaux par l'intermédiaire d'un démultiplexeur de bande à longueurs d'onde Demux' B→W. Chaque démultiplexeur Demux' B→W utilisé est un démultiplexeur désentrelaceur 1 vers 4. Un tel démultiplexeur désentrelaceur met en oeuvre un filtrage de canal, dont la fonction de transfert représentée schématiquement FTc' est périodique, basé sur des filtres de type Mach-Zehnder, ou sur des réseaux de guides de type AWG.

Le filtrage des canaux ne peut s'effectuer que si le nombre de bandes, soit trois dans l'exemple de la figure 4, et le nombre de longueurs d'onde par bande, soit quatre dans l'exemple de la figure 4, sont des nombres premiers entre eux. Si ce n'était pas le cas, la mise en oeuvre de démultiplexeurs désentrelaceurs pour filtrer d'une part, les bandes et, d'autre part les canaux, ne permettrait pas de récupérer toutes les longueurs d'onde.

Pour généraliser, soient N le nombre total de longueurs d'onde dans une fibre, p le nombre de longueurs d'onde par bande et m le nombre de bandes dans une fibre. Pour démultiplexer une fibre en m bandes, on utilise une démultiplexeur désentrelaceur 1 vers m, et pour démultiplexer une bande en p longueurs d'onde, on utilise une démultiplexeur désentrelaceur 1 vers p. Il est important de noter que les nombres m et p doivent être premiers entre eux. Dans le cas contraire, il est impossible de démultiplexer les longueurs d'onde.

Grâce à la mise en oeuvre de ce double filtrage périodique par l'intermédiaire des démultiplexeurs désentrelaceurs Demux' FB et Demux' BW, le premier pour filtrer les bandes et le second pour filtrer les longueurs d'onde, toutes les longueurs d'onde composant le multiplex d'entrée sont démultiplexées sans qu'aucune longueur d'onde ne risque d'être perdue au cours du traitement.

En effet, le problème de réjection qui intervient avec des filtres à large bande passante tels que ceux utilisés dans les démultiplexeurs de bandes adjacentes ne se pose pas avec les filtres périodiques selon l'invention. Pour ces filtres, il n'est pas nécessaire d'avoir un rapport bande passante sur bande de réjection proche de un. Un rapport de l'ordre de 0,5 est suffisant. En effet, sur une période, un filtre périodique ne sélectionne qu'une seule longueur d'onde. Donc, même si la forme réelle du filtre n'est pas parfaitement rectangulaire, cela ne nuit pas à la qualité du filtrage.

De plus, les filtres périodiques que l'invention se propose d'utiliser pour le filtrage de bande comme pour le filtrage de longueurs d'onde sont simples à mettre en oeuvre et peu onéreux.

Pour le multiplexage, il faut lire la figure 4 de droite à gauche et les références Demux' B→W et Demux' F→B sont remplacées respectivement par les références Mux' W→B et Mux' B→F.

Ainsi, les douze longueurs d'onde λ1 à λ12 sont multiplexées en trois bandes par l'intermédiaire de multiplexeurs de longueurs d'onde en bande Mux' W→B. Chaque multiplexeur Mux' W→B reçoit quatre longueurs d'onde en entrée et fournit une bande entrelacée en sortie à destination de l'étage de commutation de bande BXC. Les multiplexeurs Mux' W→B utilisés sont des multiplexeurs entrelaceurs 4 vers 1.

Les trois bandes obtenues constituées chacune de quatre canaux entrelacés sont à leur tour multiplexées par l'intermédiaire d'un multiplexeur de bandes en fibre Mux' B→F. Le multiplexeur de bandes en fibre Mux' B→F est un multiplexeur entrelaceur 3 vers 1. En sortie du multiplexeur entrelaceur Mux' B→F, on obtient un multiplex complet composé des longueurs d'onde λ1 à λ12.

Comme précédemment, pour généraliser, soient N le nombre total de longueurs d'onde dans une fibre, p le nombre de longueurs d'onde par bande et m le nombre de bandes dans une fibre, on a donc m groupes de p longueurs d'onde et N=m×p. Pour multiplexer p longueurs d'onde en une bande, on utilise un multiplexeur entrelaceur p vers 1, et pour multiplexer m bandes de longueurs d'onde entrelacées en une fibre, on utilise un multiplexeur entrelaceur m vers 1. Il est important de noter que les nombres m et p doivent être premiers entre eux. Dans le cas contraire, il n'est pas possible de multiplexer toutes les longueurs d'onde de façon satisfaisante.

## Revendications

1. Système de démultiplexage optique pour démultiplexer un multiplex constitué d'au moins trois niveaux de granularités, ledit multiplex comprenant m bandes de longueurs d'onde, chaque bande de longueurs d'onde comprenant p longueurs d'onde, les bandes étant entrelacées, les longueurs d'onde du multiplex étant distribuées sur une grille régulière, ledit système comprenant un démultiplexeur désentrelaceur 1 vers m (Demux' F→B) pour démultiplexer ledit multiplex en m bandes, le démultiplexeur désentrelaceur 1 vers m (Demux' F→B) mettant en oeuvre un filtrage de bandes entrelacées dont la fonction de transfert (FTb') est périodique et présente une période constante égale à m fois le pas de la grille régulière et présente pour chaque période une bande passante de largeur égale au pas de la grille régulière,
ledit système comprend au moins un démultiplexeur désentrelaceur 1 vers p (Demux' B→W) pour démultiplexer une bande de longueurs d'onde en p longueurs d'onde,
**caractérisé en ce que** le démultiplexeur désentrelaceur 1 vers p (Demux' B→W met en oeuvre un filtrage de canal dont la fonction de transfert (FTc') est périodique et présente une période constante égale à p fois le pas de la grille régulière et présente pour chaque période une bande passante de largeur égale au pas de la grille régulière.
et **en ce que** les nombres m et p sont des nombres premiers entre eux,le système comprenant en outre m démultiplexeurs désentrelaceurs 1 vers p (Demux' B→W) pour démultiplexer chacune desdites m bandes de longueurs d'onde en p longueurs d'onde.

2. Système de multiplexage optique pour obtenir un multiplex constitué d'au moins trois niveaux de granularité, ledit multiplex comprenant m bandes de longueurs d'onde, chaque bande de longueurs d'onde comprenant p longueurs d'onde, les bandes étant entrelacées, les longueurs d'onde du multiplex étant distribuées sur une grille régulière,
- un multiplexeur entrelaceur p vers 1 pour multiplexer p longueurs d'onde en une bande de longueurs d'onde,
**caractérisé en ce que**:
le multiplexeur entrelaceur p vers 1 met en oeuvre un filtrage de canal dont la fonction de transfert (FTc') est périodique et présente une période constante égale à p fois le pas de la grille régulière et présente pour chaque période une bande passante de largeur égale au pas de la grille régulière,
le système comprenant en outre :
- un multiplexeur entrelaceur m vers 1 pour multiplexer les m bandes de longueurs d'onde en une fibre, le multiplexeur entrelaceur m vers 1 mettant en oeuvre un filtrage de bandes entrelacées dont la fonction de transfert (FTb') est périodique et présente une période constante égale à m fois le pas de la grille régulière et présente pour chaque période une bande passante de largeur égale au pas de la grille régulière,
et **en ce que** les nombres m et p sont premiers entre eux, le système comprenant m multiplexeurs entrelaceurs p vers 1 pour multiplexer chacun p longueurs d'onde en une desdites m bandes de longueurs d'onde respectives.

3. Système selon l'une des revendications 1 et 2, **caractérisé en ce que** le filtrage de bandes entrelacées est basé sur des filtres de type Mach-Zehnder, ou sur des réseaux de guides de type AWG.

4. Système selon l'une des revendications 1 et 2, **caractérisé en ce que** le filtrage de canal est basé sur des filtres de type Mach-Zehnder, ou sur des réseaux de guides de type AWG.

## Patentansprüche

1. Optisches Demultiplexsystem zum Demultiplexen eines aus mindestens drei Granularitätsstufen bestehenden Multiplex, wobei das besagte Multiplex m Wellenlängenbänder umfasst, wobei jedes Wellenlängenband p Wellenlängen umfasst, wobei die Bänder verschachtelt sind, wobei die Wellenlängen des Multiplex über ein regelmäßiges Raster verteilt sind, wobei das besagte System einen Demultiplexer/Entschachteler 1 in m (Demux' F->B) zum Demultiplexen des besagten Multiplex in m Bänder umfasst, wobei der Demultiplexer/Entschachteler 1 in m (Demux' F->B) eine Filterung der verschachtelten Bänder durchführt, deren Übertragungsfunktion (FTb') periodisch ist und eine konstante Periode aufweist, welche gleich dem m-fachen der Teilung des regelmäßigen Rasters ist, und für jede Periode eine Bandbreite aufweist, welche gleich der Teilung des regelmäßigen Rasters ist,
wobei das besagte System mindestens einen Demultiplexer/Entschachteler 1 in p (Demux' B->W) zum Demultiplexen eines Wellenlängenbands in p Wellenlängen umfasst, **dadurch gekennzeichnet, dass** der Demultiplexer/Entschachteler 1 in p (Demux' B->W) eine Kanalfilterung durchführt, deren Übertragungsfunktion (FTc') periodisch ist und eine konstante Periode aufweist, welche gleich dem p-fachen der Teilung des regelmäßigen Rasters ist, und für jede Periode eine Bandbreite aufweist, welche gleich der Teilung des regelmäßigen Rasters ist,
und dass die Zahlen m und p miteinander teilerfremd sind, wobei das System weiterhin m Demultiplexer/Entschachteler 1 in p (Demux' B->W) umfasst, um ein jedes der besagten Wellenlängenbänder in p Wellenlängen zu demultiplexen.

2. Optisches Multiplexsystem zum Erhalten eines aus mindestens drei Granularitätsstufen bestehenden Multiplex, wobei das besagte Multiplex m Wellenlängenbänder umfasst, wobei jedes Wellenlängenband p Wellenlängen umfasst, wobei die Bänder verschachtelt sind, wobei die Wellenlängen des Multiplex über ein regelmäßiges Raster verteilt sind, **dadurch gekennzeichnet, dass** das besagte System umfasst:
- einen Multiplexer/Verschachteler p in 1 zum Multiplexen von p Wellenlängen in ein Wellenlängenband,
**dadurch gekennzeichnet, dass**:
der besagte Multiplexer/Verschachteler p in 1 eine Kanalfilterung durchführt, deren Übertragungsfunktion (FTc') periodisch ist und eine konstante Periode aufweist, welche gleich dem p-fachen der Teilung des regelmäßigen Rasters ist, und für jede Periode eine Bandbreite aufweist, welche gleich der Teilung des regelmäßigen Rasters ist,
wobei das System weiterhin umfasst:
- einen Multiplexer/Verschachteler m in 1 zum Multiplexen der m Wellenlängenbänder in eine Faser, wobei der MultiplexerNerschachteler m in 1 eine Filterung der verschachtelten Bänder durchführt, deren Übertragungsfunktion (FTb') periodisch ist und eine konstante Periode aufweist, welche gleich dem m-fachen der Teilung des regelmäßigen Rasters ist, und für jede Periode eine Bandbreite aufweist, welche gleich der Teilung des regelmäßigen Rasters ist,
und dass die Zahlen m und p miteinander teilerfremd sind, wobei das System weiterhin m Multiplexer/Verschachteler p in 1 umfasst, um eine jede der p Wellenlängen in eines der besagten jeweiligen m Wellenlängenbänder zu multiplexen.

3. System nach einem der Ansprüche 1 und 2, **dadurch gekennzeichnet, dass** die Filterung der verschachtelten Bänder auf Filtern vom Typ Mach-Zehnder oder auf Leitergittern vom Typ AWG basiert.

4. System nach einem der Ansprüche 1 und 2, **dadurch gekennzeichnet, dass** die Kanalfilterung auf Filtern vom Typ Mach-Zehnder oder auf Leitergittern vom Typ AWG basiert.

## Claims

1. An optical demultiplexing system for demultiplexing a multiplex formed of at least three granularity levels, said multiplex including m wavelength bands, each wavelength band including p wavelengths, the bands being interlaced, the wavelengths of the multiplex being distributed on a regular grid, the system comprising a 1-to-m demultiplexer/deinterleaver (Demux' F→B) for demultiplexing said multiplex into m bands, the 1-to-m demultiplexer/deinterleaver (Demux' F→B) implementing an interlaced band filter of which the transfer function (Ftb') is periodic and has a constant period equal to m times the step of the regular grid, and for each period has a bandwidth equal to the step of the regular grid,
said system comprises at least one 1-to-p demultiplexer/deinterleaver (Demux' B→W) for demultiplexing a wavelength band into p wavelengths,
**characterized in that** the 1-to-p demultiplexer/deinterleaver (Demux' B→HW) implements a channel filter of which the transfer function (FTc') is periodic and has a constant period equal to p times the step of the regular grid, and for each period has a bandwidth equal to the step of the regular grid,
and **in that** the numbers m and p are relatively prime, the system further comprising m 1-to-p demultiplexer/deinterleavers (Demux' B→W) for demultiplexing each of said m wavelength bands into p wavelengths.

2. An optical multiplexing system for obtaining a multiplex formed of at least three granularity levels, said multiplex comprising m wavelength bands, each wavelength band comprising p wavelengths, the bands being interlaced, the wavelengths of the multiplex being distributed on a regular grid, including
- a p-to-1 multiplexer/interleaver for multiplexing p wavelengths into one wavelength band,
**characterized in that**:
the p-to-1 multiplexer/interleaver implements a channel filter of which the transfer function (FTc') is periodic and has a constant period equal to p times the step of the regular grid, and for each period has a bandwidth equal to the step of the regular grid,
the system further comprising:
an m-to-1 multiplexer/interleaver for multiplexing the m wavelength bands into one fiber, the m-to-1 multiplexer/interleaver implementing an interlaced band filter of which the transfer function (FTc') is periodic and has a constant period equal to m times the step of the regular grid, and for each period has a bandwidth equal to the step of the regular grid,
and **in that** the numbers m and p are relatively prime, the system comprising m p-to-1 multiplexer/interleavers for multiplexing each of the p wavelengths into one of said m respective wavelength bands.

3. A system according to one of the claims 1 and 2, **characterized in that** the interlaced band filter is based on Mach-Zehnder filters, or on AWG waveguide gratings.

4. A system according to one of the claims 1 and 2, **characterized in that** the channel filter is based on Mach-Zehnder filters, or on AWG waveguide gratings.
